# FASCICULE DE BREVET EUROPEEN

(11) **EP 2 268 445 B1**
(45) Date de publication et mention de la délivrance du brevet: **05.07.2017**
(21) Numéro de dépôt: 08787940.9
(22) Date de dépôt: 11.04.2008
(51) Int. Cl.: B23K 11/06, B23K 11/36

(54) **METHODE ET DISPOSITIF DE MESURE DE POSITION ADAPTES POUR LE POSITIONNEMENT D'UNE MOLETTE**
VORRICHTUNG UND VERFAHREN ZUR POSITIONSMESSUNG UND POSITIONNIERUNG EINER ROLLE
POSITION-MEASURING METHOD AND DEVICE ADAPTED FOR THE POSITIONING OF A WHEEL

(43) Date de publication de la demande: 05.01.2011
(73) Titulaire: Primetals Technologies France SAS, 42600 Savigneux (FR)
(72) Inventeur: BARJON, Stéphane, F-42210 Montrond-les-Bains (FR); THOMASSON, Hervé, F-38200 Seyssuel (FR)
(74) Mandataire: Metals@Linz
(86) Numéro de dépôt international: PCT/FR2008/000505
(87) Numéro de publication internationale: WO 2009/125073

(56) Documents cités:
- GB-A- 681 075
- US-A- 3 909 578

## Description

L'invention se rapporte au positionnement d'une molette adaptée pour un soudage électrique par résistance à la molette, plus particulièrement au procédé dit «par écrasement» de bandes d'acier en défilement continu.

Les procédés de transformation de bandes d'acier en défilement continu tels que le laminage à froid, le décapage chimique, la galvanisation, le recuit font appel à des dispositifs aptes à rabouter par soudage la tête d'une nouvelle bande à la queue de la bande précédemment engagée dans la ligne, un dispositif d'accumulation permettant d'accumuler de la bande puis de la restituer vers l'aval lorsque la soudure est effectuée.
Un des procédés habituellement utilisés est le soudage par résistance à la molette par écrasement dit «mash welding » ou « mash lap welding» ou « mash seam welding ». Dans ce procédé, le soudage bout à bout des extrémités de bandes, disposées avec un léger recouvrement, est réalisé par passage d'un courant de soudage approprié entre deux molettes serrées à une pression déterminée. Une telle installation de soudage est décrite dans les brevets US 3,446,933 et US 3,909,578. Afin de permettre à la bande raboutée de traverser l'ensemble de l'installation de transformation sans rupture de bande et sans détérioration des machines de transformation, il est nécessaire que la surépaisseur de la soudure soit aussi faible que possible. A cette fin, la longueur de recouvrement des deux bords à souder doit être maintenue très faible afin de limiter la largeur de l'inévitable bourrelet qui sera ensuite écrasé par des galets d'écrasement situés en aval des molettes de soudage. D'autre galets dits « de pré-écrasement» complètent parfois le dispositif et sont situés en amont des molettes de soudage.
De manière connue, la qualité d'une soudure à la molette dépend de la qualité de positionnement des bords à souder: Le plan vertical passant par les molettes doit être bien perpendiculaire au plan des mors assurant le serrage des extrémités de bande à souder; L'altitude des molettes doit être bien réglée par rapport aux mors de serrage. Dans le cas particulier du soudage « mash welding », un faible recouvrement des bords à souder, voisin de 0,7 à 0,8 fois l'épaisseur de la bande à souder, exagère encore ces contraintes et conduit à des dispositions constructives particulières pour assurer la précision et la répétitivité des mouvements des mors et des chariots portant les molettes de soudage et les galets d'écrasement. Ce problème, déjà important pour des épaisseurs moyennes - de l'ordre du millimètre et plus - devient absolument critique pour des épaisseurs plus fines. De plus, la seule qualité mécanique de la machine de soudage ne suffit pas à assurer la qualité du joint soudé, il est aussi impératif que les bords à souder soient présentés exactement à l'altitude des molettes, or l'usure des dites molettes rend leur positionnement de plus en plus imprécis au fil de la diminution de leur diamètre et il est nécessaire de procéder régulièrement à leur réglage. Pour cela une face active de l'une des deux molettes qui servira de molette de référence, celle qui n'est pas actionnée par le vérin d'application de la force de soudage, en général la molette supérieure, est ajustée par rapport à un plan de référence, par exemple la face inférieure des mors de serrage supérieurs. Pour ce faire, un opérateur doit mettre la machine en conditions de sécurité en coupant toutes les sources d'énergie, y compris résiduelles, de la machine et en s'assurant que toutes les dispositions sont prises sur la ligne continue de transformation pour que la bande ne soit pas introduite de manière intempestive dans la machine. Il matérialise alors le plan de référence, par exemple à l'aide d'une règle qu'il met en appui sur une face de référence des mors, et règle ensuite la position de la molette de référence. Une telle opération nécessite l'emploi de procédures de mise en sécurité qui stoppent l'activité de la ligne durant toute l'opération de réglage. L'absence de telles procédures, pénalisantes pour la productivité de l'installation, est absolument à proscrire sauf à mettre en danger l'opérateur.

Le but de la présente invention est de présenter une méthode et un dispositif de mesure pour un positionnement automatique de la molette, visant à éviter toute intervention manuelle de l'opérateur.

L'objet de l'invention et ses avantages seront mieux interprétés à l'aide des exemples donnés par les figures suivantes:
Figure 1 : Architecture générale d'une ligne de transformation de bandes d'acier en défilement continu.
Figure 2 : Disposition typique des organes de soudage d'une machine de soudage par résistance à la molette par écrasement.
Figure 3a : Séquence de fonctionnement du dispositif de réglage selon l'invention : outillage de réglage en position de repos
Figure 3b : Séquence de fonctionnement du dispositif de réglage selon l'invention : outillage en position verticale sous la tête de soudage
Figure 3c : Séquence de fonctionnement du dispositif de réglage selon l'invention : outillage en position de réglage

Les figures décrivent un outillage dans lequel la molette de référence MS est la molette supérieure. L'invention est également valable pour le cas ou la molette de référence est la molette inférieure.

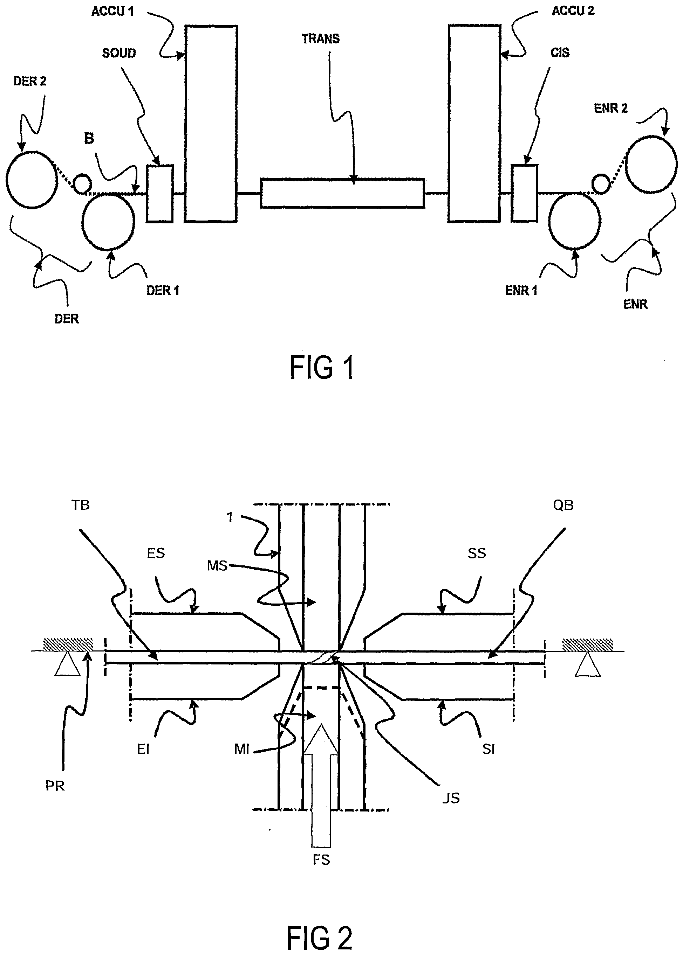

La figure 1 montre l'architecture générale d'une ligne de transformation de bandes d'acier en défilement continu. Une première bande est déroulée sur un ensemble de déroulage (DER) comportant deux dérouleurs (DER 1, DER 2). Une machine de soudage (SOUD) permet le soudage d'une queue de la première bande à une tête d'une deuxième bande suivante, les deux bandes ainsi soudées formant une bande soudée (B). Un dispositif d'accumulation (ACCU 1) stocke la bande soudée (B) lors de son défilement. Cet ensemble constitue la section d'entrée de la ligne de transformation. La bande (B) passe ensuite dans une section de transformation (TRANS) où elle peut subir uniquement ou successivement des opérations de décapage chimique, de laminage à froid, de recuit, de galvanisation, de peinture, etc. Ayant subi des opération de transformation, la bande (B) entre ensuite dans une section de sortie où elle est stockée dans un accumulateur de sortie (ACCU 2), découpée par une cisaille (CIS) puis enroulée sous forme de bobines transformées sur un dispositif d'enroulage (ENR) disposant d'un ou deux enrouleurs (ENR 1, ENR 2).

La figure 2 montre une disposition typique des organes de soudage d'une machine de soudage par résistance à la molette par écrasement. La queue de la première bande (QB) est pincée par des mors de sortie (SS et SI) de la machine de soudage, la tête de la bande suivante (TB) est pincée par des mors d'entrée (ES, EI). La queue de la bande (QB) et la tête de la bande (TB) forment un joint à souder (JS). La face supérieure de la bande soudée (B), qui est aussi la face inférieure des mors supérieurs d'entrée (ES) et de sortie (SS) correspond à un plan de référence (PR) par rapport auquel une molette de référence doit être réglée. Dans la représentation de la figure 2, un vérin de serrage applique une force (FS) sur une molette inférieure (MI). La molette de référence en tant que molette supérieure (MS) est fixée à une tête de soudage (1). La surface de contact avec la bande (B) doit être contenue dans le plan de référence (PR) ou éventuellement à une distance donnée dudit plan (PR) avec, dans la pratique, une tolérance de quelques centièmes de millimètres.

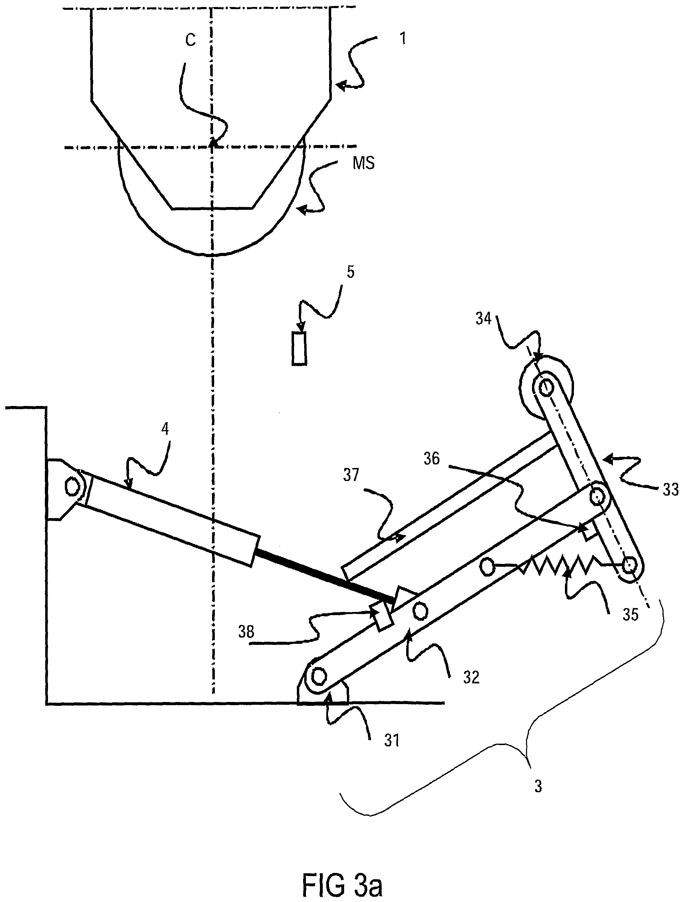

La figure 3a montre l'outillage de réglage en position de repos. Il comporte un cadre basculable (3) pouvant être mis en position active de mesure ou en position de repos par un vérin (4). Ledit cadre (3) est composé d'une chape de pivotement (31) sur laquelle est articulée une colonne (32) sur laquelle est lui-même articulé un bras (33). Le bras (33) est maintenu dans la position de repos représentée sur la figure (3a) par une butée (36) solidaire de la colonne (32) et d'un organe élastique de rappel (35). Le bras (33) supporte un galet rotatif (34) et un index (37) fixé d'un coté au bras (33). Une extrémité libre de l'index (37) est placée de manière à ce que sa position puisse être mesurée par un dispositif de détection et de mesure de position (38). Une buttée de dispositif (5), fixée sur une structure non-représentée de la machine de soudage empêche un mouvement du cadre (3) au-delà de la position active de mesure. La molette de référence est fixée à une tête de soudage (1) dans un point de suspension (C).

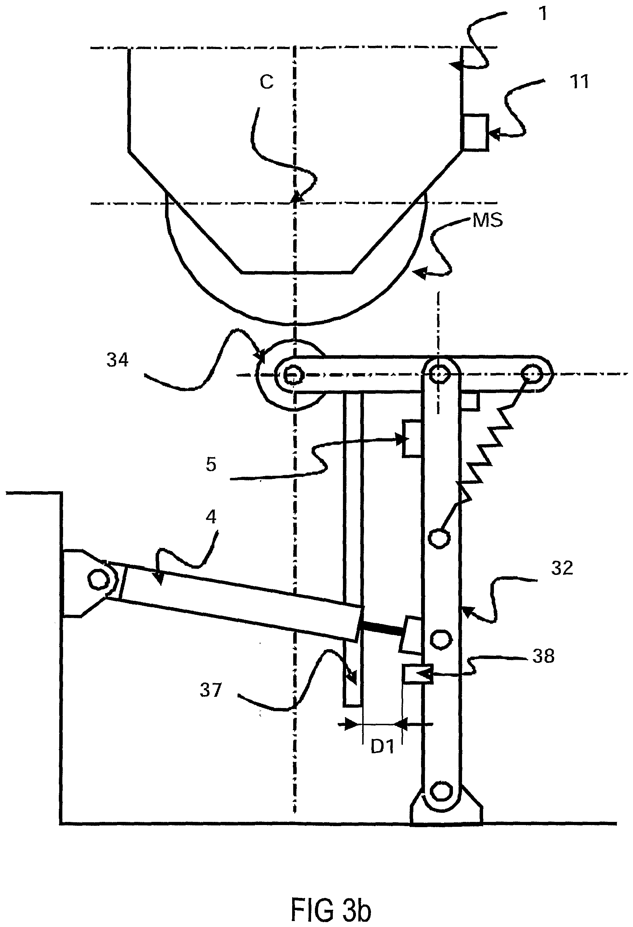

La figure 3b montre l'outillage en position verticale sous la tête de soudage (1) en position de parking, ladite tête de soudage (1) étant arrêtée sur une butée de tête de soudage fixe (11). L'outillage est lui-même arrêté en position sur la butée de dispositif fixe (5), ce qui permet à une face inférieure de la molette (MS) d'être à l'aplomb d'une face supérieure du galet (34). Dans cette situation, l'index (37) est à une distance maximale (D1) du dispositif de détection et de mesure de position (38). Le terme face supérieure signifie le plan horizontal, tangentiel au galet et disposé au point le plus élevée de la surface dudit galet. Le terme face inférieure signifie le plan horizontal, tangentiel à la molette (MS) et disposé au point le plus bas de la surface de la molette (MS). Les termes face inférieure et face supérieure sont utilisés pour raisons de clarté. En autre termes, les molettes étant en rotation, la face inférieure et la face supérieure dénotent respectivement une surface active de la molette de référence MS et une surface active de la molette inférieure MI.

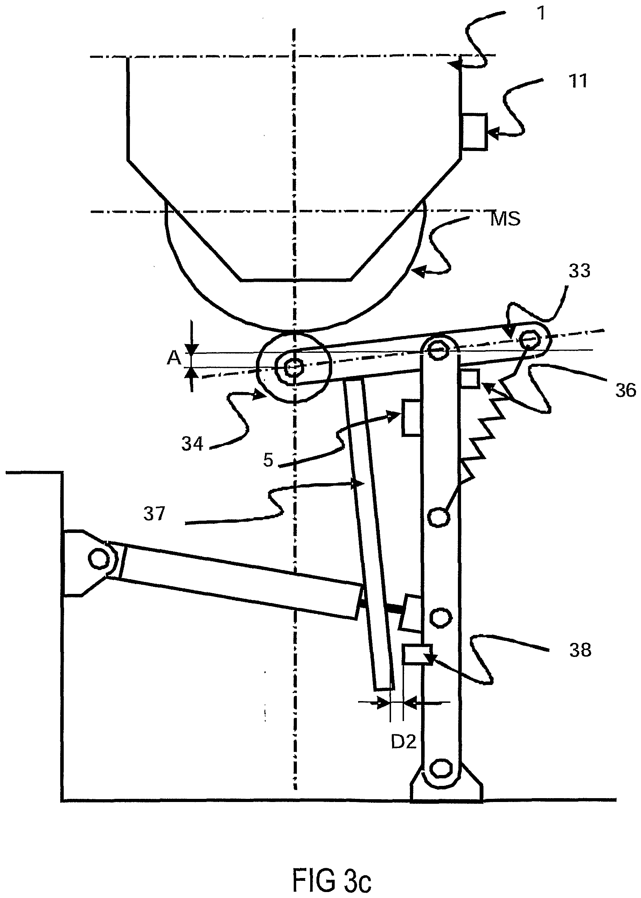

La figure 3c montre l'outillage en position de réglage, la molette (MS) est descendue progressivement grâce à un chariot motorisé (non représenté) au contact du galet (34), par pression la molette fait pivoter le bras (33) et l'index (37) se rapproche du dispositif de détection et de mesure de position (38) d'une distance (D2) correspondant à un déplacement vertical (A) du galet (34). Le galet (34) amène, par construction, en d'autres termes à l'aide de la butée de tête de soudage fixe (11), sa face supérieure au niveau du plan de référence (PR) ou éventuellement à une distance donnée du plan (PR). Ainsi, quelque soit le diamètre neuf ou usé de la molette (MS), la face inférieure est dans la position requise pour un soudage de qualité. Cette position est enregistrée en tant que point de référence dans un système de contrôle d'un chariot motorisé qui déplace la tête de soudage (1).

La méthode de mesure de distance comporte les étapes de :
a) mise en position de mesure d'un galet rotatif 34 fixé à un cadre basculable 3, la position de mesure étant verticalement au dessous d'une molette de référence MS,
b) descente verticale continue A de la molette de référence MS, entrainant une entrée en contact de sa face inférieure avec le galet rotatif 34 et provoquant une force d'appui sur le galet 34,
c) déplacement continu du galet 34 dans la direction de la descente A,
d) mesures répétées d'une distance D2 entre un index 37 solidaire d'un bras de mesure 33 du cadre 3 et une colonne articulée 32 fixée au cadre 3 pendant le déplacement continu,
e) comparaison de la distance D2 avec un seuil de distance pour chacune des mesures répétées jusqu'à ce qu'une première position de travail de la molette MS soit atteinte, pour laquelle la distance D2 est égale à un facteur prédéfini du seuil de distance,
f) enregistrement de la première position de travail comme point de référence dans un système de déplacement vertical de la molette de référence MS.

Au regard de l'état de la technique déjà mentionné, un avantage majeur de l'invention est de s'affranchir de l'arrêt d'une ligne de production pour un contrôle de la position des molettes, donc permettant d'augmenter la productivité de ladite ligne. Un autre avantage majeur est l'augmentation de la sécurité pour des opérateurs de ligne, libérés ainsi de toutes actions manuelles sur la machine de soudage.

Un aspect supplémentaire de l'invention consiste à pouvoir adopter un de deux modes de positionnement de la molette de référence MS: arrêt de la descente verticale A et verrouillage de la molette de référence MS dans la première position de travail; arrêt de la descente verticale A dans la première position de travail et déplacement vertical ultérieur de la molette de référence MS dans une seconde position de travail, la seconde position de travail étant ajustable à distance par un opérateur. Avantageusement, les deux possibilités permettent d'adapter une position de travail en prenant en considération des caractéristiques spéciales de la machine de soudage, en particulier la structure de support des molettes. La force de soudage appliquée par un vérin à la molette inférieure MI, peut provoquer une déformation minimale de ladite structure, de plus, à cause de ladite déformation, un léger décalage de la première position de travail de la molette de référence MS. A cause de cela, il peut être nécessaire d'ajuster ladite première position de façon qu'après cet ajustage la molette de référence se trouve dans la deuxième position de travail.

Un autre aspect de l'invention consiste à calculer un diamètre de la molette de référence MS après avoir positionné la molette MS dans la première position de travail ou la seconde position de travail. Cet aspect avantageusement permet de régulièrement vérifier l'usure de la molette MS. de façon à détecter une usure au-delà des limites de tolérance. Donné la position du plan de référence PR, une position initiale du point de suspension C de la molette et le déplacement vertical A, le diamètre se calcule en soustrairant la valeur du déplacement vertical A de la valeur de la distance entre le point de référence PR et le point de suspension C.

Un aspect supplémentaire de l'invention consiste à effectuer la mesure de position après un changement ou un ré usinage de la molette de référence MS et d'une deuxième molette MI. Avantageusement il est possible de rajuster l'altitude de la mollette de référence MS par rapport au plan de référence PR, en prenant en considération le diamètre changé, à cause du ré usinage ou du changement, de ladite molette MS.

Un autre aspect de l'invention consiste en ce que la mesure est adaptée pour le positionnement des molettes de référence MS de diamètres différents. Cet aspect rend la méthode très flexible et adaptable pour des machines de soudage des différentes tailles.

Dépendant d'une précision exigée de la soudure, il est possible d'adopter trois modes de mesure: une mesure à la fin de chaque soudure; au moins deux mesures pendant une campagne de soudures; une mesure déclenchée par un opérateur de ligne. Cela rend avantageusement la méthode flexible afin de déterminer un degré d'usure de la molette de référence MS. Par exemple, la mesure automatisée à la fin de chaque soudure apporte une précision maximale de positionnement pour des soudures de très haute qualité, spécialement importantes pour des faibles épaisseurs de la bande B. À outre des mesures engagées automatiquement, un autre avantage est la possibilité de manuellement déclencher une mesure par intervention d'un operateur de ligne.
La mise en oeuvre de la méthode de mesure est assurée par un dispositif de mesure adapté pour le positionnement des molettes d'une machine de soudage par résistance par écrasement destinée au raboutage de bandes d'acier sur des lignes continues de transformation, comprenant :
∘ un vérin 4 actionnant un cadre basculable 3 d'une position non active de parking à une position active de mesure,
∘ un bras de mesure 33 couplé à une colonne articulée 32, le bras 33 et la colonne 32 étant fixés au cadre basculable 3, le bras étant couplé au cadre 3 à l'aide d'un organe élastique de rappel 35,
∘ un galet rotatif 34 porté par le bras de mesure 33,
∘ un dispositif de détection et de mesure de position 38 fixé au cadre 3,
∘ un index 37 solidaire du bras 33, d'une longueur suffisante pour que sa position soit détectable par le dispositif de détection 38,
∘ une butée de dispositif 5 mécaniquement bloquant un mouvement du cadre 3 au-delà de la position active de mesure,
∘ une butée solidaire à la colonne 36 qui empêche un rappel du bras 33, provoqué par l'organe élastique 35 au-delà de la position de parking.

Avantageusement, le dispositif selon l'invention est adapté afin de permettre un dimensionnement d'une longueur du bras de mesure 33 et une longueur de la colonne articulée 32 tels qu'un rapport entre les deux longueurs détermine et offre donc une gamme étendue de valeurs mesurables de la position de l'index 37. Cela permet avantageusement d'améliorer la précision exigée de la mesure de position. Un deuxième avantage est la flexibilité d'adaptation du dispositif pour sa mise en oeuvre dans différentes variantes des machines de soudage. Ceci signifie qu'un rayon des molettes utilisées dans une machine de soudage détermine une longueur minimale du bras de mesure 33. La longueur du bras 33 doit être choisie plus grande que le rayon de la molette inférieure MI. Cette nécessité s'impose à cause d'un basculement du dispositif de la position de parking en la position de mesure, de façon que le bras de mesure 33 soit déplacé au dessus de la molette inférieure MI. Ainsi, la longueur de la colonne 32 est dimensionnée en fonction de la longueur nécessaire du bras 33 pour satisfaire à un rapport des longueurs selon la gamme de valeurs mesurables à obtenir.

Une variante du dispositif comporte deux galets superposés, aptes à venir respectivement au contact d'une molette de soudage inférieure MI à la bande d'acier et de la molette (MS) et à soumettre lesdites deux molettes MI, MS à un traitement d'écrouissage de leurs surfaces extérieures. Avantageusement, en plus de sa vocation d'organe de réglage, le dispositif peut être utilisé pour effectuer sur la face inférieure de la molette de référence MS et la face supérieure de la molette inférieure MI un traitement d'écrouissage visant à leur restituer une dureté abaissé par leur échauffement durant le soudage.

Le dispositif de mesure adapté pour le positionnement des molettes pour lequel le dispositif de détection et de mesure 38 comprend des moyens optiques de mesure de distance. Le dispositif de détection 38 comprend par exemple un laser pour mesurer la distance entre l'index 37 et le cadre 32.
Le dispositif 38 peut également utiliser des moyens ultra-son de mesure de distance.

### Abréviations

- B: = bande d'acier
- DER: = ensemble de déroulage
- DER 1: = dérouleur 1
- DER 2: = dérouleur 2
- SOUD: = machine de soudage
- ACCU 1: = dispositif d'accumulation de bande
- TRANS: = section de transformation
- ACCU 2: = accumulateur de sortie
- CIS: = cisaille
- ENR: = dispositif d'enroulage
- ENR 1: = enrouleur 1
- ENR 2: = enrouleur 2
- 1: = tête de soudage
- MS: = molette de référence
- MI: = molette inférieure à la bande
- JS: = Joint à souder
- PR: = plan de référence
- QB: = première bande
- TB: = seconde bande
- ES, EI: = mors d'entrée
- SS, SI: = mors de sortie
- FS: = force de serrage des molettes
- 3: = cadre de réglage
- 4: = vérin
- 5: = butée de dispositif fixe
- 11: = butée de tête de soudage fixe
- 31: = chape de pivotement
- 32: = colonne articulée
- 33: = bras de mesure
- 34: = galet rotatif
- 35: = organe élastique de rappel
- 36: = butée solidaire de la colonne
- 37: = index
- 38: = dispositif de détection et de mesure de position
- D1: = distance maximale de l'index du dispositif de mesure de position pour l'outillage en position verticale
- D2: = distance de l'index du dispositif de mesure de position pour l'outillage en position de mesure
- A: = déplacement vertical du galet
- C: = point de suspension de la molette de référence

## Revendications

1. Méthode de mesure de position adaptée pour le positionnement d'une molette adaptée pour un soudage par résistance à la molette par écrasement, aux fins d'un raboutage de bandes d'acier sur des lignes continues de transformation comportant les étapes de:
a) mise en position de mesure d'un galet rotatif (34) fixé à un cadre mobile (3), la position de mesure étant verticalement au dessous d'une molette de référence (MS),
b) descente verticale continue (A) de la molette de référence(MS), entrainant une entrée en contact de sa face inférieure avec le galet rotatif (34) et provoquant une force d'appui sur le galet (34),
c) déplacement continu du galet (34) dans la direction de la descente (A),
d) mesures répétées d'une distance (D2) entre un index (37) solidaire d'un bras de mesure (33) du cadre (3) et une colonne articulée (32) fixée au cadre (3) pendant le déplacement continu,
e) comparaison de la distance (D2) avec un seuil de distance pour chacune des mesures répétées jusqu'à ce qu'une première position de travail de la molette (MS) soit atteinte, pour laquelle la distance (D2) est égale à un facteur prédéfini du seuil de distance,
f) enregistrement de la première position de travail comme point de référence dans un système de déplacement vertical de la molette de référence (MS).

2. Méthode selon la revendication 1, **caractérisée en ce que** une de deux modes de positionnement de la molette de référence (MS) est adoptée : arrêt de la descente verticale (A) et verrouillage de la molette de référence (MS) dans la première position de travail; arrêt de la descente verticale (A) dans la première position de travail et déplacement vertical ultérieur de la molette de référence (MS) dans une seconde position de travail, la seconde position de travail étant ajustable à distance par un opérateur.

3. Méthode selon la revendication 2, **caractérisée en ce qu'**un calcul de diamètre de la molette de référence (MS) est effectué après avoir positionné la molette (MS) dans la première position de travail ou la seconde position de travail.

4. Méthode selon l'une quelconque des revendications précédentes, **caractérisée en ce que** la mesure de position est effectuée après un changement ou un ré usinage de la molette de référence (MS) et d'une deuxième molette (MI).

5. Méthode selon l'une quelconque des revendications précédentes, **caractérisée en ce que** la mesure de position est adaptée pour le positionnement des molettes de référence (MS) de diamètres différents.

6. Méthode selon l'une quelconque des revendications précédentes, **caractérisée en ce que** une de trois modes de mesure est adoptée: une mesure à la fin de chaque soudure; au moins deux mesures pendant une campagne de soudures; une mesure déclenchée par un opérateur de ligne.

7. Dispositif de mesure adapté pour le positionnement des molettes d'une machine de soudage par résistance par écrasement destinée au raboutage de bandes d'acier sur des lignes continues de transformation, comprenant:
∘ un vérin (4) actionnant un cadre basculable (3) d'une position non active de parking à une position active de mesure,
∘ un bras de mesure (33) couplé à une colonne articulée (32), le bras (33) et la colonne (32) étant fixés au cadre basculable (3), le bras étant couplé au cadre (3) à l'aide d'un organe élastique de rappel (35),
∘ un galet rotatif (34) porté par le bras de mesure (33).
∘ un dispositif de détection et de mesure de position (38) fixé au cadre (3),
∘ un index (37) solidaire du bras (33), d'une longueur suffisante pour que sa position soit détectable par le dispositif de détection (38),
∘ une buttée de dispositif (5) mécaniquement bloquant un mouvement du cadre (3) au-delà de la position active de mesure,
∘ une butée solidaire à la colonne (36) qui empêche un rappel du bras (33), provoqué par l'organe élastique (35) au-delà de la position de parking.

8. Dispositif selon la revendication 7, **caractérisé en ce qu'**un rapport entre une longueur du bras de mesure (33) et une longueur de la colonne articulée (32) détermine une gamme de valeurs mesurables de position de l'index (37).

9. Dispositif selon la revendication 7 ou 8, comportant deux galets superposés aptes à venir respectivement au contact d'une molette de soudage inférieure (MI) à la bande d'acier et de la molette de référence (MS) et à soumettre lesdites deux molettes (MI, MS) à un traitement d'écrouissage de leurs surfaces extérieures actives.

10. Dispositif selon l'une quelconque des revendications précédentes 7 à 9, pour lequel le dispositif de détection et de mesure de position (38) comprend des moyens optiques de mesure de distance.

11. Dispositif selon la revendication précédente, **caractérisé en ce que** le dispositif de détection et de mesure de position (38) comprend des moyens ultra-son de mesure de distance.

## Patentansprüche

1. Verfahren zur Positionsmessung, welches für die Positionierung einer Rolle geeignet ist, die für ein Quetschnahtschweißen zum Zwecke eines Stumpfverbindens von Stahlbändern auf kontinuierlichen Verarbeitungslinien geeignet ist, die folgenden Schritte umfassend:
a) Bringen einer drehbaren Rolle (34), die an einem beweglichen Rahmen (3) befestigt ist, in eine Messposition, wobei sich die Messposition vertikal unter einer Referenzrolle (MS) befindet,
b) kontinuierliche vertikale Abwärtsbewegung (A) der Referenzrolle (MS), was ein Inkontaktkommen ihrer unteren Seite mit der drehbaren Rolle (34) zur Folge hat und eine Druckkraft auf die Rolle (34) hervorruft,
c) kontinuierliche Verschiebung der Rolle (34) in der Richtung der Abwärtsbewegung (A),
d) wiederholte Messungen eines Abstands (D2) zwischen einem Zeiger (37), der mit einem Messarm (33) des Rahmens (3) fest verbunden ist, und einer an dem Rahmen (3) befestigten, gelenkig angebrachten Stütze (32) während der kontinuierlichen Verschiebung,
e) Vergleich des Abstands (D2) mit einem Abstandsschwellenwert für jede der wiederholten Messungen, bis eine erste Arbeitsposition der Rolle (MS) erreicht ist, für welche der Abstand (D2) gleich dem mit einem vordefinierten Faktor multiplizierten Abstandsschwellenwert ist,
f) Speicherung der ersten Arbeitsposition als Referenzpunkt in einem System der vertikalen Verschiebung der Referenzrolle (MS).

2. Verfahren nach Anspruch 1, **dadurch gekennzeichnet, dass** eine von zwei Arten der Positionierung der Referenzrolle (MS) gewählt wird: Anhalten der vertikalen Abwärtsbewegung (A) und Verriegeln der Referenzrolle (MS) in der ersten Arbeitsposition; Anhalten der vertikalen Abwärtsbewegung (A) in der ersten Arbeitsposition und spätere vertikale Verschiebung der Referenzrolle (MS) in eine zweite Arbeitsposition, wobei die zweite Arbeitsposition durch einen Bediener fernverstellbar ist.

3. Verfahren nach Anspruch 2, **dadurch gekennzeichnet, dass** eine Berechnung des Durchmessers der Referenzrolle (MS) durchgeführt wird, nachdem die Rolle (MS) in der ersten Arbeitsposition oder der zweiten Arbeitsposition positioniert worden ist.

4. Verfahren nach einem der vorhergehenden Ansprüche, **dadurch gekennzeichnet, dass** die Positionsmessung nach einer Auswechselung oder einer Nachbearbeitung der Referenzrolle (MS) und einer zweiten Rolle (MI) durchgeführt wird.

5. Verfahren nach einem der vorhergehenden Ansprüche, **dadurch gekennzeichnet, dass** die Positionsmessung für die Positionierung der Referenzrollen (MS) mit unterschiedlichen Durchmessern geeignet ist.

6. Verfahren nach einem der vorhergehenden Ansprüche, **dadurch gekennzeichnet, dass** eine von drei Arten der Messung gewählt wird: eine Messung am Ende jeder Schweißung; wenigstens zwei Messungen während einer Serie von Schweißungen; eine Messung, die von einem Bediener der Linie ausgelöst wird.

7. Messvorrichtung, welche für die Positionierung der Rollen einer Widerstandsschweißmaschine zum Quetschnahtschweißen geeignet ist, die für das Stumpfverbinden von Stahlbändern auf kontinuierlichen Verarbeitungslinien bestimmt ist, umfassend:
∘ einen Zylinder (4), der einen Rahmen (3) betätigt, der aus einer nicht aktiven Parkposition in eine aktive Messposition schwenkbar ist,
∘ einen Messarm (33), der mit einer gelenkig angebrachten Stütze (32) gekoppelt ist, wobei der Arm (33) und die Stütze (32) an dem schwenkbaren Rahmen (3) befestigt sind, wobei der Arm mit dem Rahmen (3) mithilfe eines elastischen Rückholorgans (35) gekoppelt ist,
∘ eine drehbare Rolle (34), die von dem Messarm (33) getragen wird,
∘ eine Positionserkennungs- und -messvorrichtung (38), die an dem Rahmen (3) befestigt ist,
∘ einen mit dem Arm (33) fest verbundenen Zeiger (37) mit einer Länge, die ausreichend dafür ist, dass seine Position für die Erkennungsvorrichtung (38) erkennbar ist,
∘ einen Vorrichtungsanschlag (5), der eine Bewegung des Rahmens (3) über die aktive Messposition hinaus mechanisch blockiert,
∘ einen mit der Stütze fest verbundenen Anschlag (36), welcher ein durch das elastische Organ (35) hervorgerufenes Rückholen des Armes (33) über die Parkposition hinaus verhindert.

8. Vorrichtung nach Anspruch 7, **dadurch gekennzeichnet, dass** ein Verhältnis zwischen einer Länge des Messarmes (33) und einer Länge der gelenkig angebrachten Stütze (32) einen Bereich von messbaren Positionswerten des Zeigers (37) bestimmt.

9. Vorrichtung nach Anspruch 7 oder 8, welche zwei übereinander gelagerte Rollen aufweist, die geeignet sind, mit einer Schweißrolle (MI) unterhalb des Stahlbandes bzw. mit der Referenzrolle (MS) in Kontakt zu kommen und diese zwei Rollen (MI, MS) einer Kaltverfestigungsbehandlung ihrer aktiven äußeren Flächen zu unterziehen.

10. Vorrichtung nach einem der vorhergehenden Ansprüche 7 bis 9, bei welcher die Positionserkennungs- und - messvorrichtung (38) optische Mittel zur Abstandsmessung umfasst.

11. Vorrichtung nach dem vorhergehenden Anspruch, **dadurch gekennzeichnet, dass** die Positionserkennungs- und - messvorrichtung (38) Ultraschallmittel zur Abstandsmessung umfasst.

## Claims

1. Position-measuring method suitable for the positioning of a wheel suitable for mash seam welding, for the purpose of butt-joining strips of steel on continuous transformation lines, comprising the steps of:
a) putting a rotary roller (34), which is attached to a mobile frame (3), into the measuring position, the measuring position being vertically below a reference wheel (MS),
b) continuously vertically lowering (A) the reference wheel (MS), as a result of which its lower face comes into contact with the rotary roller (34), producing a contact force on the roller (34),
c) continuously displacing of the roller (34) in the direction of lowering (A),
d) repeatedly measuring a distance (D2) between an indicator (37) secured to a measuring arm (33) of the frame (3) and an articulated column (32) attached to the frame (3) during the continuous displacement,
e) comparing the distance (D2) with a distance threshold for each one of the repeated measurements until a first working position of the wheel (MS) is reached, for which the distance (D2) is equal to a predefined factor of the distance threshold,
f) recording the first working position as a reference point in a system for the vertical displacement of the reference wheel (MS).

2. Method according to Claim 1, **characterized in that** one of two modes of positioning the reference wheel (MS) is adopted: stopping the vertical lowering (A) and locking the reference wheel (MS) in the first working position; stopping the vertical lowering (A) in the first working position and subsequent vertical displacement of the reference wheel (MS) into a second working position, wherein the second working position can be adjusted remotely by an operator.

3. Method according to Claim 2, **characterized in that** a calculation of the diameter of the reference wheel (MS) is carried out after the wheel (MS) has been positioned in the first working position or the second working position.

4. Method according to any one of the preceding claims, **characterized in that** the position measurement is carried out after changing or re-machining the reference wheel (MS) and a second wheel (MI).

5. Method according to any one of the preceding claims, **characterized in that** the position measurement is adapted for positioning reference wheels (MS) of different diameters.

6. Method according to any one of the preceding claims, **characterized in that** one of three measurement modes is adopted: a measurement at the end of each weld; at least two measurements during a weld pass; a measurement initiated by a line operator.

7. Measuring device suitable for the positioning of the wheels of a mash seam welding machine designed for butt-joining strips of steel on continuous transformation lines, comprising:
∘ an actuator (4) that actuates a pivotable frame (3) from a non-active parking position to an active measuring position,
∘ a measuring arm (33) coupled to an articulated column (32), the arm (33) and the column (32) being attached to the pivotable frame (3), the arm being coupled to the frame (3) by means of an elastic return element (35),
∘ a rotary roller (34) borne by the measuring arm (33),
∘ a position detection and measuring device (38) attached to the frame (3),
∘ an indicator (37) which is secured to the arm (33) and whose length is sufficient for its position to be able to be detected by the detection device (38),
∘ a device stop (5) that mechanically prevents the frame (3) from moving beyond the active measuring position,
∘ a stop secured to the column (36), which prevents the elastic element (35) returning the arm (33) beyond the parking position.

8. Device according to Claim 7, **characterized in that** a ratio between a length of the measuring arm (33) and a length of the articulated column (32) determines a range of measurable values of the position of the indicator (37).

9. Device according to Claim 7 or 8, comprising two superposed rollers which are able to come into contact respectively with a lower welding wheel (MI) at the steel strip, and with the reference wheel (MS), and to subject said two wheels (MI, MS) to a work-hardening treatment of their active outer surfaces.

10. Device according to any one of the preceding Claims 7 to 9, in which the position detection and measuring device (38) comprises optical distance measuring means.

11. Device according to the preceding claim, **characterized in that** the position detection and measuring device (38) comprises ultrasonic distance measuring means.
